# EUROPEAN PATENT APPLICATION

(11) **EP 2 857 873 A1**
(43) Date of publication of application: **08.04.2015**
(21) Application number: 13801274.5
(22) Date of filing: 04.02.2013
(51) Int. Cl.: G02B 5/08, G06F 3/033, G06F 3/041

(54) **OPTICAL FILM AND ELECTRONIC PEN SYSTEM USING SAME**

(30) Priority: 05.06.2012 KR 20120060537
(71) Applicant: Pen Generations, Inc., Seongnam-si, Gyeonggi-do 463-400 (KR)
(72) Inventor: KANG, Yong Hoon, Seoul 140-100 (KR)
(74) Representative: Vossius & Partner
(86) International application number: PCT/KR2013/000881
(87) International publication number: WO 2013/183850

(57) **Abstract**

Disclosed are an optical film and an electronic pen system. The electronic pen system includes: a reflective display configured to display information by using surrounding light; an optical film disposed on the reflective display, and formed with an information pattern including virtual grid lines and a plurality of marks for providing position information by using light reflected from the reflective display; and an electronic pen configured to recognize the information pattern, and transmit a signal for displaying graphic information on the reflective display.

## Description

### TECHNICAL FIELD

The present invention relates to an optical film and an electronic pen system, and more particularly, to an optical film applied to a reflective display, and an electronic pen system using the same.

### BACKGROUND ART

An electronic pen system, which is a new conceptual pen in which analog and digital are combined, is a pen created so as to store written contents in a memory embedded in the pen when writing characters on a paper, similar to a general pen, transmit the stored contents to a computer in a form of an image file, and manage the image file. A document written by using a general pen may be scanned by a scanner (electronic color separating device) and the scanned document may also be stored in a form of an image file, but a document written by using an electronic pen may be easily managed through a separate program without the necessity of a scanning process. Earlier inventions of an electronic pen can be used only when being connected to a computer. That is, in order to use the electronic pen, there is inconvenience in that a power supply of a computer always needs to be turned on, and further, the electronic pen needs to be used at a place close to a computer. Further, there is a disadvantage in that when contents written by using the electronic pen are stored in a computer, resolution of an image file is low, so that it is difficult to accurately recognize the contents.

Currently, a high-functional electronic pen, which is capable of storing written contents in a memory embedded in the electronic pen and converting the stored contents into digital data anytime when being only connected to a computer, has also been released. A product, in which a liquid crystal display is embedded in an electronic pen itself to enable a user to directly confirm written contents through a screen, and a digital pen, which is capable of wirelessly transmitting data without a connection to a cable, have been developed, and a touch screen method capable of detecting position information of an electronic pen on a display, or a technique capable of detecting a movement trace of an electronic pen by mounting a detecting sensor to an external side of the electronic pen, and the like have been utilized.

However, in the touch screen method or the scheme using the external detecting sensor, as a size of a display is increased, costs of the display are increased, power consumption is rapidly increased, and accuracy in recognizing a trace of the electronic pen is degraded. Accordingly, a technique for finely forming an information pattern including position information about a surface on the surface of a display in a degree, at which it is difficult to determine the information pattern by a human vision, detecting the information pattern by using an electronic pen including an optical sensor, and determining a position on the display, has been commercialized.

A technique for detecting a touch position of an electronic pen by using an infrared sensor mounted in the electronic pen and displaying graphic information at the detected position is disclosed in several patent documents including Korean Patent Application Laid-Open No. 10-2010-0134331. However, Korean Patent Application Laid-Open No. 10-2010-0134331 is for the purpose of displaying graphic information by detecting position information on a transmissive display, so that an infrared light source needs to be separately provided. Further, in order for an electronic pen to recognize a mark on an optical film, the optical film needs to be fabricated of a material capable of reflecting visible rays, and when the optical film is attached to the display, there is a problem in that definition and visibility of an entire image deteriorate.

### SUMMARY OF THE INVENTION

The present invention has been made in an effort to provide an optical film, which is capable of displaying graphic information on a reflective display or deleting graphic information according to position information calculated from a mark, reducing power consumption by using the reflective display using an external light source, and applicable to various smart learning fields, and an electronic system using the same.

An exemplary embodiment of the present invention provides an optical film disposed on a reflective display, and formed with an information pattern for providing position information by using light reflected from the reflective display, in which the information pattern includes virtual grid lines and a plurality of marks.

The information pattern may include the virtual grid lines formed at a predetermined interval and one or more marks based on a crossing point of the virtual grid lines, and the position information may be provided by a mark value determined according to a position of the mark formed based on the crossing point of the virtual grid lines.

The mark may be formed by using infrared ray absorbing ink.

The mark may be formed of a phthalocyanine-based compound, a napthalocyanine-based compound, and an aminium-based compound.

Another exemplary embodiment of the present invention provides an electronic pen system, including: a reflective display configured to display information by using surrounding light; an optical film disposed on the reflective display, and formed with an information pattern including virtual grid lines and a plurality of marks for providing position information by using light reflected from the reflective display; and an electronic pen configured to recognize the information pattern, and transmit a signal for displaying graphic information on the reflective display.

The reflective display may be driven by any one method among an electrophoretic method, a micro-electro-mechanical system (MEMS), and an electrowetting method.

The mark of the optical film may be formed of infrared ray absorbing ink.

The mark of the optical film may have brightness of a specific scale or lower.

The reflective display may be formed to have brightness enough to be discriminated from the mark of the optical film in gray scales divided into a plurality of steps.

The electronic pen may recognize the information pattern and transmit a signal for displaying graphic information on the reflective display or deleting graphic information.

The electronic pen system may further include: a first infrared sensor provided at one side of the electronic pen and configured to recognize an information pattern for displaying the graphic information; and a second infrared sensor provided at the other side of the electronic pen and configured to recognize an information pattern for deleting the graphic information, or a button for discriminating a display function from a deletion function.

According to the exemplary embodiments of the present invention, the optical film and the electronic pen system using the same may display graphic information on the reflective display or delete the graphic information according to position information calculated from a mark, reduce power consumption by using the reflective display using an external light source, and be applicable to various smart learning fields.

### BRIEF DESCRIPTION OF THE DRAWINGS

FIG. 1 is a perspective diagram illustrating an electronic pen system according to an exemplary embodiment of the present invention.
FIG. 2 is a conceptual diagram illustrating an operation of the reflective display according to the exemplary embodiment of the present invention.
FIG. 3 is a schematic diagram of the reflective display according to the exemplary embodiment of the present invention.
FIG. 4 is a diagram describing an information pattern according to the exemplary embodiment of the present invention.
FIG. 5 is a schematic diagram of an information pattern according to the exemplary embodiment of the present invention.
FIG. 6 is a configuration diagram illustrating an electronic pen system according to an exemplary embodiment of the present invention.
FIG. 7 is a configuration diagram illustrating an electronic pen system according to another exemplary embodiment of the present invention.
FIGS. 8 and 9 are an example of a screen configuration of the electronic pen system according to an exemplary embodiment of the present invention.
FIG. 10 is another example of a screen configuration of the electronic pen system according to the exemplary embodiment of the present invention.
FIG. 11 is yet another example of a screen configuration of the electronic pen system according to the exemplary embodiment of the present invention.

### DETAILED DESCRIPTION

The present invention may have various modifications and exemplary embodiments and thus specific exemplary embodiments will be illustrated in the drawings and described. However, it is not intended to limit the present invention to the specific exemplary embodiments, and it will be appreciated that the present invention includes all modifications, equivalences, or substitutions included in the spirit and the technical scope of the present invention.

Terms including an ordinal number, such as first and second, are used for describing various constituent elements, but the constituent elements are not limited by the terms. The terms are used only to discriminate one constituent element from another constituent element. For example, without departing from the scope of the invention, a first constituent element may be named as a second constituent element, and similarly a second constituent element may be named as a first constituent element. A term "and/or" includes a combination of multiple relevant described items or any one of the multiple relevant described items.

It should be understood that when one constituent element is referred to as being "coupled to" or "connected to" another constituent element, one constituent element can be directly coupled to or connected to the other constituent element, but intervening elements may also be present. By contrast, when one constituent element is referred to as being "directly coupled to" or "directly connected to" another constituent element, it should be understood that there are no intervening elements.

Terms used in the present application are used only to describe specific exemplary embodiments, and are not intended to limit the present invention. Singular expressions used herein include plurals expressions unless they have definitely opposite meanings in the context. In the present application, it will be appreciated that terms "including" and "having" are intended to designate the existence of characteristics, numbers, steps, operations, constituent elements, and components described in the specification or a combination thereof, and do not exclude a possibility of the existence or addition of one or more other characteristics, numbers, steps, operations, constituent elements, and components, or a combination thereof in advance.

All terms used herein including technical or scientific terms have the same meanings as meanings which are generally understood by those skilled in the art unless they are differently defined. Terms defined in a generally used dictionary shall be construed that they have meanings matching those in the context of a related art, and shall not be construed in ideal or excessively formal meanings unless they are clearly defined in the present application.

Hereinafter, exemplary embodiments according to the present invention will be described in detail with reference to the accompanying drawings, and the same or corresponding constituent elements are denoted by the same reference numerals regardless of a sign of the drawing, and repeated description thereof will be omitted.

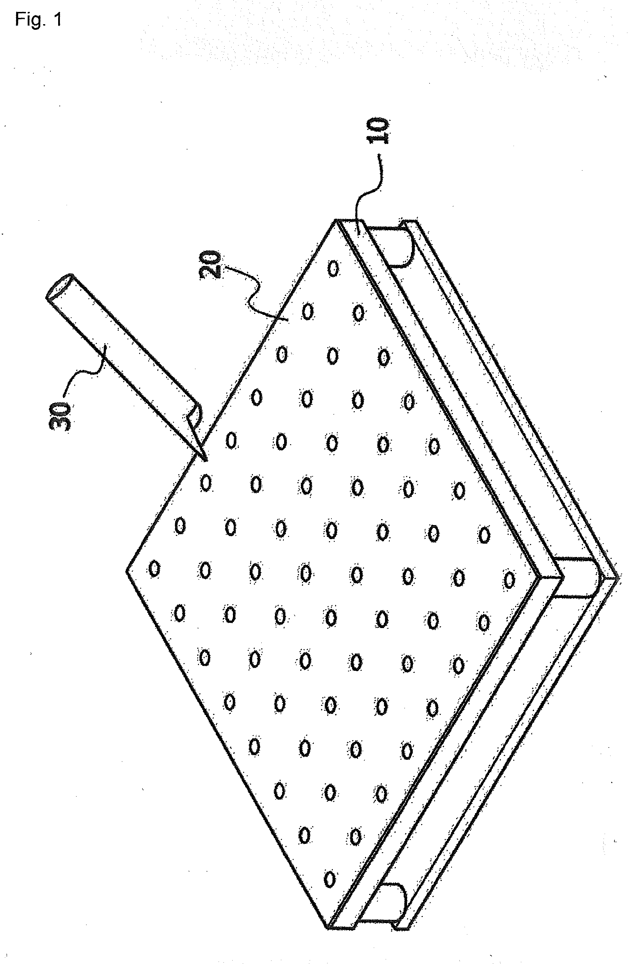

FIG. 1 is a perspective diagram illustrating an electronic pen system according to an exemplary embodiment of the present invention.

Referring to FIG. 1, an electronic pen system according to an exemplary embodiment of the present invention may include: a reflective display 10 for displaying information by using surrounding light; an optical film 20 disposed on the reflective display 10, and formed with an information pattern, which includes virtual grid lines 22 and a plurality of marks 21 for providing position information by using light reflected from the reflective display 10; and an electronic pen 30 for recognizing the information pattern from light reflected from the reflective display 10 and displaying graphic information on the reflective display 10.

First, the reflective display 10 may display information by using an external light source without a separate light source. A display may be divided according to a method of utilizing a light source. A transmissive display adopts a method in which light emitted from a backlight passes through a top surface, so that information is displayed to the outside, while a reflective display adopts a method in which an external light source is reflected from a surface of the display in a front direction, so that information is displayed to the outside without a backlight unit. The reflective display may be driven by any one method of an electrophoretic method, a micro-electro-mechanical system (MEMS), and an electrowetting method. In the electrophoretic method, black and white materials inside spherical particles move according to application of electricity to express black and white images. The electrowetting method may reflect light and express colors by using a principle in that red, blue, and green dye oil of each pixel is spread or collected. The MEMS adopts a principle in that sun light is reflected by a reflective film to express various colors.

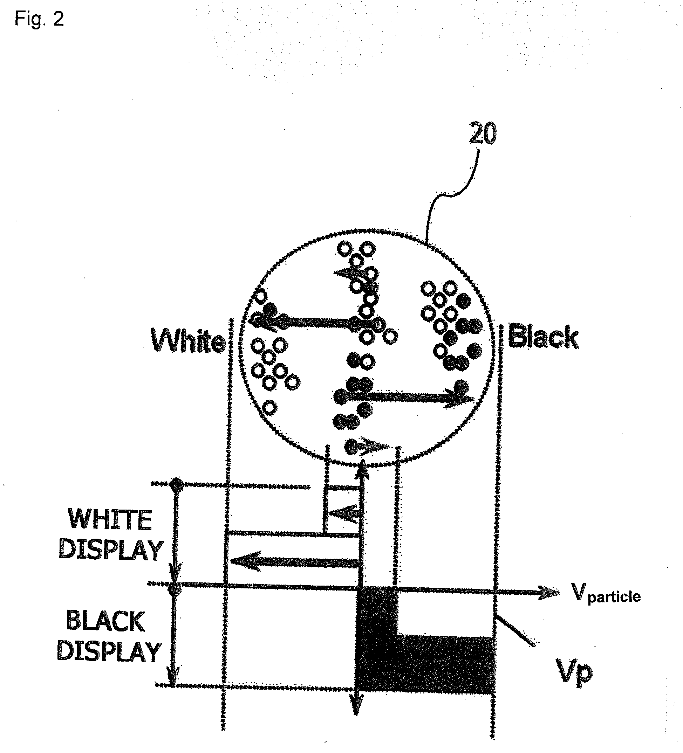

FIG. 2 is a conceptual diagram illustrating an operation of the reflective display according to the exemplary embodiment of the present invention. A driving method of the reflective display may be generally divided into three methods as described above, but a common operational principle is to use a combination of each pixel 20 expressed with black and white when a voltage is applied and is not applied. Referring to FIG. 2, when it is assumed that Vp is an application voltage, and a voltage equal to or greater than an application voltage is applied, negatively charged ink microparticles move to a surface of the pixel, so that the pixel 20 is displayed with a black color, and when a voltage equal to or smaller than the application voltage is applied, ink microparticles move downward, so that the pixel 20 is displayed with a white color, and thus a character or an image is displayed through the aforementioned method. Further, each pixel 20 may be expressed with a plurality of achromatic colors existing between a black color and a white color according to a size of a voltage applied to the pixel 20, and the plurality of achromatic colors is referred to as a gray scale, and the gray scale may be divided into an eight step gray scale, a 10 step gray scale, a 16 step gray scale, ..., an n step gray scale, and the like according to the number of achromatic colors existing between a black color and a white color.

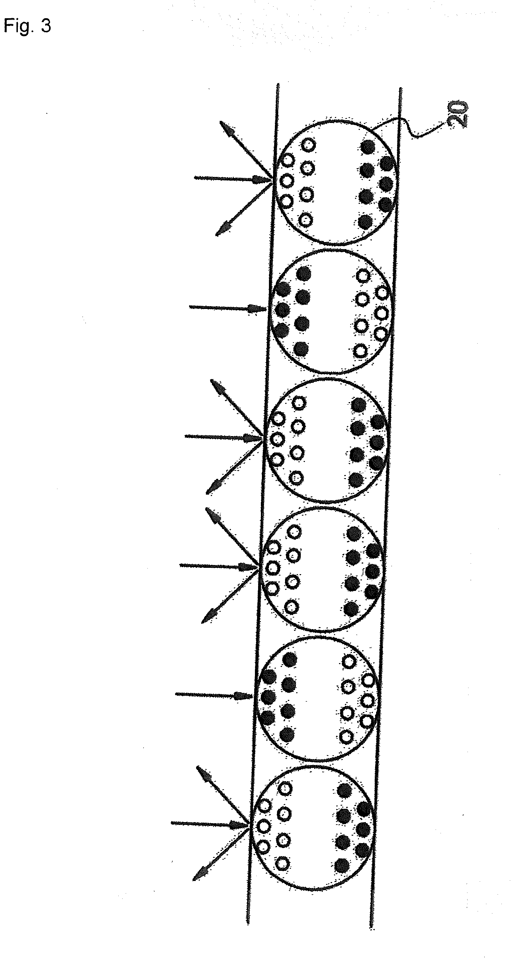

FIG. 3 is a schematic diagram of the reflective display according to the exemplary embodiment of the present invention. Referring to FIG. 3, the respective pixels 20 may be indicated by a plurality of gray scales by varying voltages applied to the serially arranged pixels 20. Each pixel 20 serves to reflect or absorb an external light source, and a pixel 20 close to white among the gray scales serves to reflect the external light source and a pixel 20 close to black serves to absorb the external light source, thereby displaying a character or an image on the display.

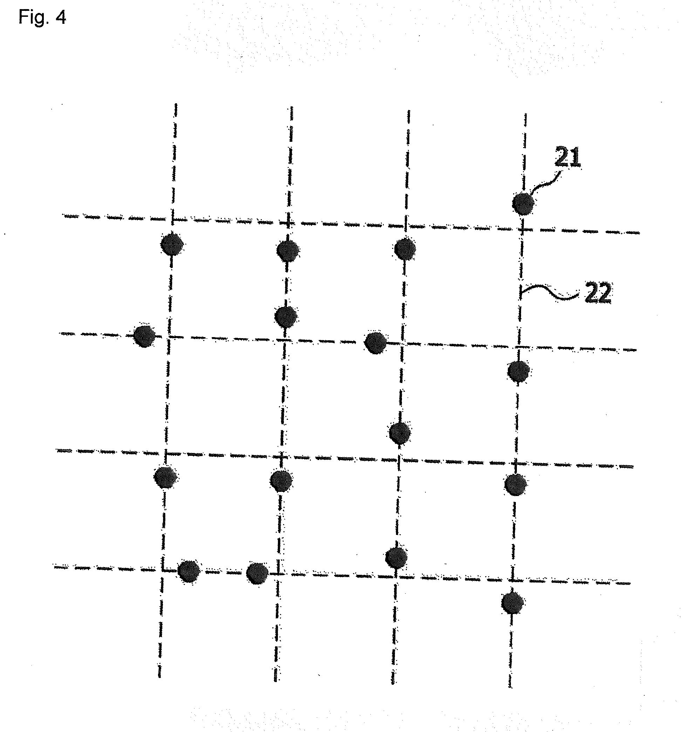

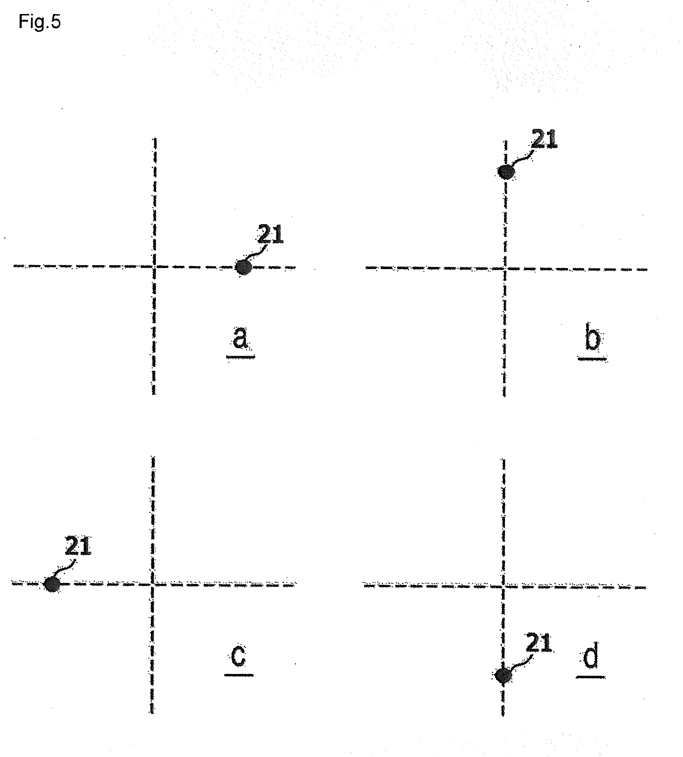

FIG. 4 is a diagram describing an information pattern according to the exemplary embodiment of the present invention, and FIG. 5 is a schematic diagram of an information pattern according to the exemplary embodiment of the present invention. The optical film 20 is disposed on the reflective display 10, and formed with an information pattern for providing position information by using light reflected from the reflective display 10.

Referring to FIG. 4, the information pattern includes the virtual grid lines 22 and the plurality of marks 21, and the marks 21 may be formed at a predetermined interval based on a crossing point of the virtual grid lines 22. Each mark 21 may provide position information by a mark value determined according to a position formed based on the crossing point of the virtual grid lines 22. The marks 21 may be formed at a predetermined interval based on the crossing points of the virtual grid lines 22, and have mark values, respectively, and the mark value may be configured by a combination of two or more different numbers. The mark 21 has various shapes, such as a circle, an ellipse, a polygon, and a straight line, and one type of mark 21 may be used in one reflective display 10.

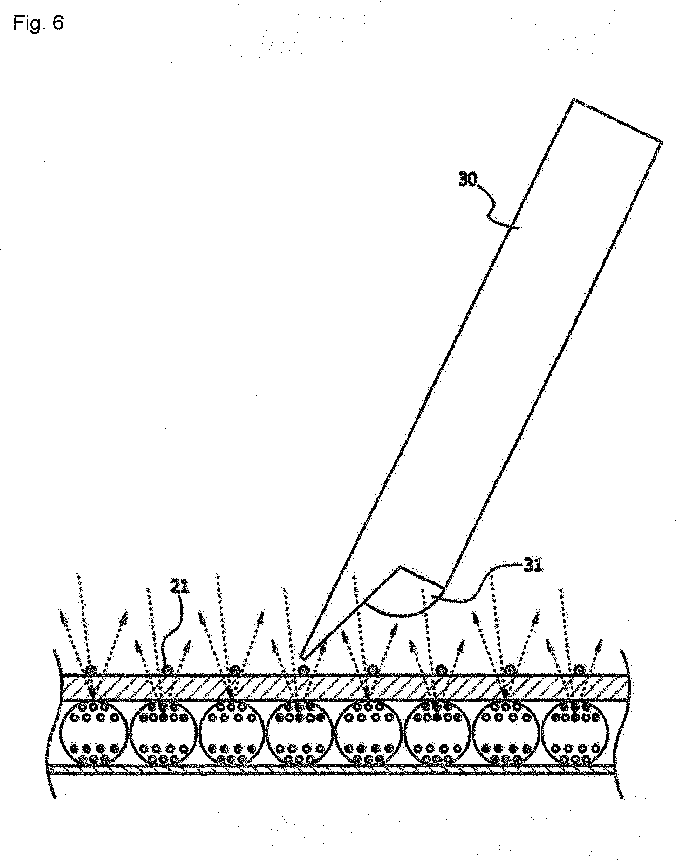

For example, referring to FIG. 6, the mark 21 may be located at four positions according to a relationship with the crossing point of the virtual grid lines 22, and when the mark 21 is located at a right side of the crossing point, such as "a", the mark value may be indicated by "1", when the mark 21 is located at an upper side of the crossing point, such as "b", the mark value may be indicated by "2", when the mark 21 is located at a left side of the crossing point, such as "c", the mark value may be indicated by "3", and when the mark 21 is located at a lower side of the crossing point, such as "d", the mark value may be indicated by "4", thereby providing position information according to a position of the mark 21 based on the crossing point of the virtual grid lines 22.

The mark 21 may also be formed in a diagonal direction, not on the virtual grid lines 22, and the plurality of marks 21 may be formed at one crossing point of one virtual grid lines 22, thereby providing position information. In this case, each mark value may be divided into an x-coordinate and a y-coordinate to be expressed by predetermined coordinates, and position information may be provided based on the mark value expressed with coordinates.

The virtual grid lines 22 may be horizontally and vertically formed at a predetermined interval. A distance between the grid lines 22 may be formed with 250 to 300 µm or more, and the mark 21 may be formed at a point distant 1/4 or 1/8 from the crossing point of the virtual grid lines 22. Otherwise, two or more marks 21 may be associatively formed based on the crossing point of the virtual grid lines 22.

For example, when an infrared detecting sensor of the electronic pen 30 recognizes 36 marks 21, which include six marks in a horizontal direction and a vertical direction each, on the grid lines 22 having a size of 6 × 6, the electronic pen 30 may calculate position information according to each mark value, and recognize an absolute position on the reflective display 10 by using the calculated position information.

The optical film 20 is formed of a transparent material, and allows visible rays to pass through and makes the visible ray be incident into the reflective display 10. The optical film 20 may include a plastic film formed of polyethylene terephthalate (PET), polyethylene naphthalate (PEN), aligned polypropylene, polycarbonate, triacetate, and the like, glass, and the like. The optical film 20 may be laid on an upper part of the reflective display 10 to be used, or may further include an adhesive layer (not illustrated) at a lower part to be detachable from the reflective display 10 for use.

The mark 21 may be formed of an ink material which has excellent visible ray transmittance, and is capable of selectively absorbing only infrared rays. An infrared region has a wavelength of approximately 700 to 10,000 nm, and may be divided into a near-infrared region, a mid-infrared region, and a far-infrared region, and the mark 21 may absorb infrared rays in a near-infrared region having a wavelength of approximately 750 nm to 1,300 nm.

The mark 21 may be formed by generating a resin compound by mixing, for example, a phthalocyanine-based compound, a napthalocyanine-based compound, an aminium-based compound, and the like, which have a ultraviolet ray absorbing property, with a resin having an infrared ray curable property, and a hardening agent, and coating the generated resin compound on the optical film 20 formed of the enumerated transparent materials.

Brightness of the mark 21 may be formed based on gray scales of the reflective display 10. Even though information, such as an image and a character, displayed on the reflective display 10 is similar to, or darker than brightness of the mark 21, if a difference in brightness is small, there may be generated a case where the electronic pen 30 cannot recognize the mark 21 formed on the optical film 20. Accordingly, when brightness of the mark 21 is maintained to be darker with a difference by specific scales or more, preferably, four and five scales or more, at the gray scales than the information, such as an image and a character, displayed on the reflective display 10, the electronic pen 30 may recognize the mark 21 even though the information, such as the image and the character, is displayed darkly on the reflective display 10. However, when the mark 21 is formed to be dark, overall brightness of the optical film 20 is decreased, and when the optical film 20 is attached to the reflective display 10, overall visibility or definition deteriorates, so that brightness of the mark 21 and brightness of a character or an image on the display may be determined within a limit within which the electronic pen 30 may recognize the mark 21.

FIG. 6 is a configuration diagram illustrating an electronic pen system according to an exemplary embodiment of the present invention.

Referring to FIG. 6, the electronic pen 30 may have a form of a general pen, and an infrared detecting sensor may be provided at a part at which a pen point is formed. The infrared detecting sensor 31 may recognize the mark 21 formed on the optical film 31. The electronic pen 30 may calculate a mark value according to the mark 21 recognized by the infrared detecting sensor 31, and calculate a position within an optical film 20. For example, when an infrared detecting sensor of the electronic pen 30 recognizes 36 marks 21, which include six marks in a horizontal direction and a vertical direction each, on the grid lines 22 having a size of 6 × 6, the electronic pen 30 may calculate position information according to each mark value, and recognize an absolute position on the reflective display 10 by using the calculated position information.

The electronic pen 30 may transmit the calculated position information to the reflective display 10 by a wired or wireless communication method, and the reflective display 10 may display the graphic information to the outside according to a trace of the position information transmitted by the electronic pen 30. The electronic pen 30 and the reflective display 10 may be connected by wire to transmit data by using a serial communication method, or perform data communication by using any one near field wireless communication method among Bluetooth, infrared communication, RF communication, and ZigBee communication.

The MCU is embedded in the electronic pen 30, so that the electronic pen 30 may analyze the position information according to a mark value, or when the electronic pen 30 recognizes a mark value and transmits the recognized mark value to the reflective display 10, the reflective display 10 may be implemented so as to calculate the position information according to the mark value and display graphic information according to the calculated position information to the outside. The electronic pen 30 may transmit data for a mark value to an external computer or a processor of a smart phone and the like, and the external processor may analyze position information according to a mark value and transmit the analyzed position information to the electronic pen 30 or the reflective display 10.

A light source (not illustrated) capable of emitting infrared ray or visible ray may be included in the electronic pen 30. The electronic pen 30 may recognize the marks 21 formed on the reflective display 10 by using infrared ray included in natural light, a fluorescent lamp, and the like, but the reflective display 10 may display information by using light emitted from the electronic pen 30 itself in a dark place where infrared ray is not sufficiently provided to recognize the mark 21, and the electronic pen 30 may recognize the mark 21 formed on the optical film 20.

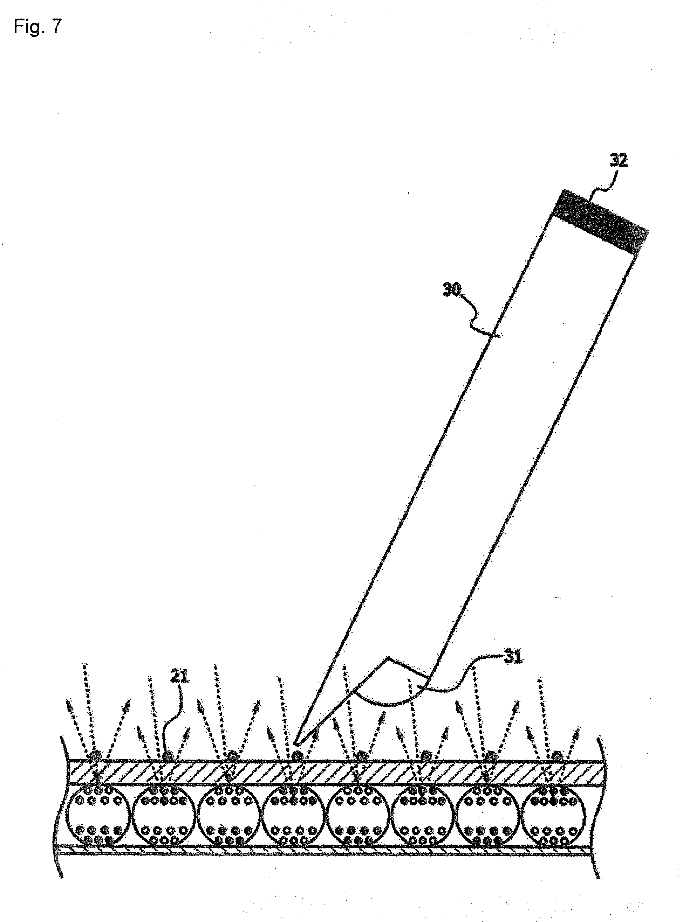

A function capable of deleting graphic information displayed on the reflective display by using the electronic pen 30 may be included in the electronic pen 30. The MCU of the electronic pen 30 may simultaneously transmit a recording/deleting flag while transmitting the mark value or the position information on the mark 21 recognized by the infrared detecting sensor according to an external input. This may be implemented by adding a 1 bit signal, such as 0/1, to the mark value or the position information expressed by a digital signal, and when the receive bit signal is 0, the MCU of the reflective display 10 may display graphic information on the corresponding position information, or when the receive bit signal is 1, the MCU of the reflective display 10 may delete the graphic information displayed on the corresponding position information. The electronic pen 30 may implement a function of displaying or deleting graphic information according to an on/off state of an additionally provided switch (not illustrated), and the switch may be provided at a lateral part of the electronic pen 30 or a distal end opposite to a distal end provided with the pen point. Otherwise, an infrared sensor for displaying graphic information and an infrared sensor for deleting graphic information are additionally provided at the electronic pen 30 to implement a deletion function, which will be described with reference to FIG. 7.

FIG. 7 is a configuration diagram illustrating an electronic pen system according to another exemplary embodiment of the present invention. An electronic pen system according to another exemplary embodiment of the present invention includes: a reflective display 10 for displaying information by using surrounding light; an optical film 20 disposed on the reflective display 10, and formed with an information pattern, which includes virtual grid lines 22 and a plurality of marks 21 for providing position information by using light reflected from the reflective display 10; and an electronic pen 30 for recognizing the information pattern and transmitting a signal for displaying graphic information on the reflective display 10, and a first infrared sensor 31 for recognizing an information pattern for displaying graphic information is provided at one side of the electronic pen 30, and a second infrared sensor 32 for recognizing an information pattern for deleting graphic information is provided at the other side of the electronic pen 30.

Referring to FIG. 7, the first infrared sensor 31 may be provided at one side of the 30 and the second infrared sensor 32 may be provided at the other side of the 30, and preferably, the first infrared sensor may be provided at a distal end of a part, at which a pen point is formed, and the second infrared sensor 32 may be provided at a distal end part opposite to the pen point. The electronic pen 30 may be implemented so as to transmit a mark value or position information detected by the first infrared sensor 31 together with a bit signal of 0 to display graphic information on the corresponding position information, and a mark value or position information detected by the second infrared sensor 32 together with a bit signal of 1 to delete graphic information displayed on the corresponding position information.

Other devices for communication means and devices, such as a microphone and a speaker, capable of various functions may be embedded inside the electronic pen 30, and operations thereof may be controlled by the MCU embedded in the electronic pen 30. Otherwise, an ink is included in a pen point part of the electronic pen 30, so that the electronic pen 30 may perform a function of a general pen, and the optical film formed with the information pattern may be attached onto a notebook, a board, and an electronic board capable of displaying information by reflecting an external light source to be used.

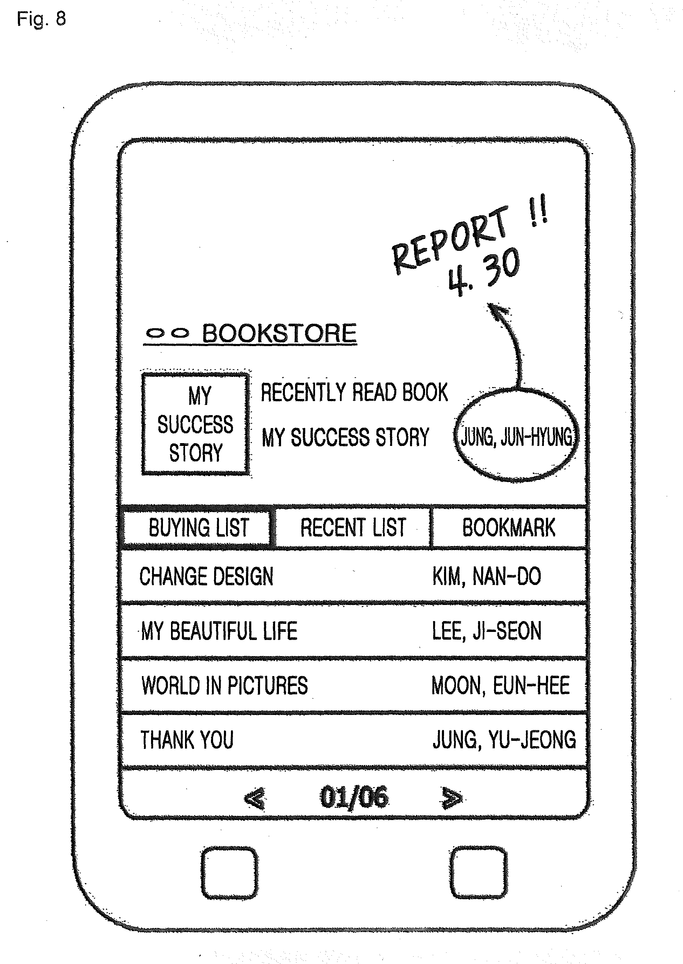

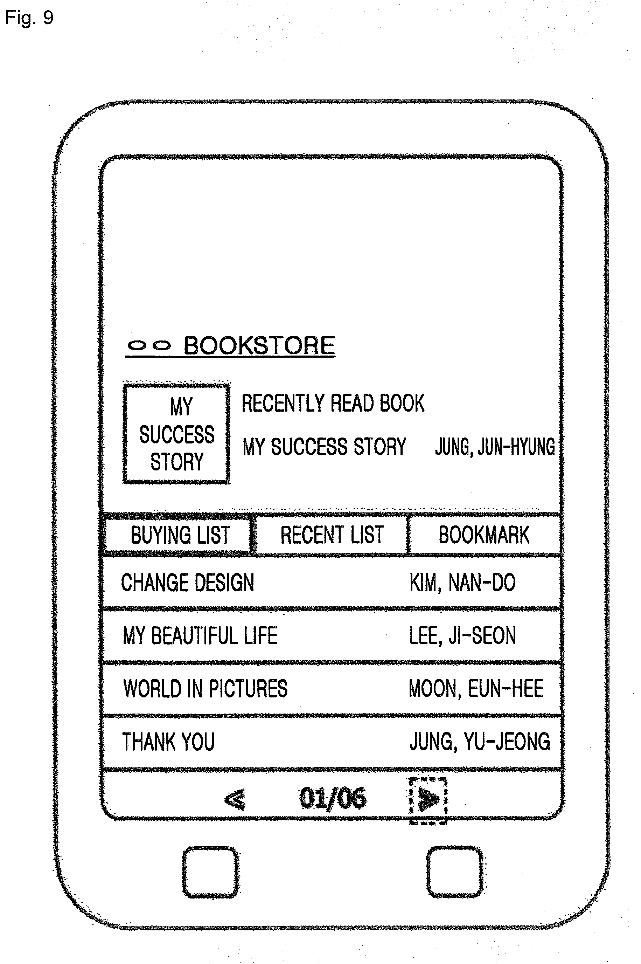

FIGS. 8 and 9 are an example of a screen configuration of the electronic pen system according to an exemplary embodiment of the present invention.

Referring to FIG. 8, the electronic pen system according to the exemplary embodiment of the present invention may be linked with an e-book system including the reflective display 10 to be utilized by a method of putting a memo to information displayed on a screen or underlining the information. The electronic pen system may also be utilized in a digital textbook, an electronic board, and a terminal device, such as a smart phone, implementable by the reflective display, as well as the e-book. Further, Further, the electronic pen system may be implemented so that only information displayed with the electronic pen 30 may be separately extracted and stored by adding a database and a communication device to the listed devices implemented by the reflective display 10, and the information may be transmitted to other terminal devices and the like by using a communication device.

Referring to FIG. 9, the electronic pen system according to the exemplary embodiment of the present invention may be implemented so that the electronic pen system is linked with an e-book system including the reflective display, so that a command is input by a touch screen method according to a contact point of the electronic pen 30. The electronic pen 30 recognizes the mark 21 formed on the reflective display, so that when position information calculated according to a mark value is converted into an electric signal, the MCU embedded in the reflective display controls the electronic pen 30 so that the electronic pen 30 performs a command positioned at a contact point of the electronic pen 30. According to the aforementioned operation principle, an e-book may perform an operation, such as turning pages or marking a bookmark. Further, other terminal devices implemented by the reflective display may perform an operation of playing music or video and the like by using the electronic pen 30.

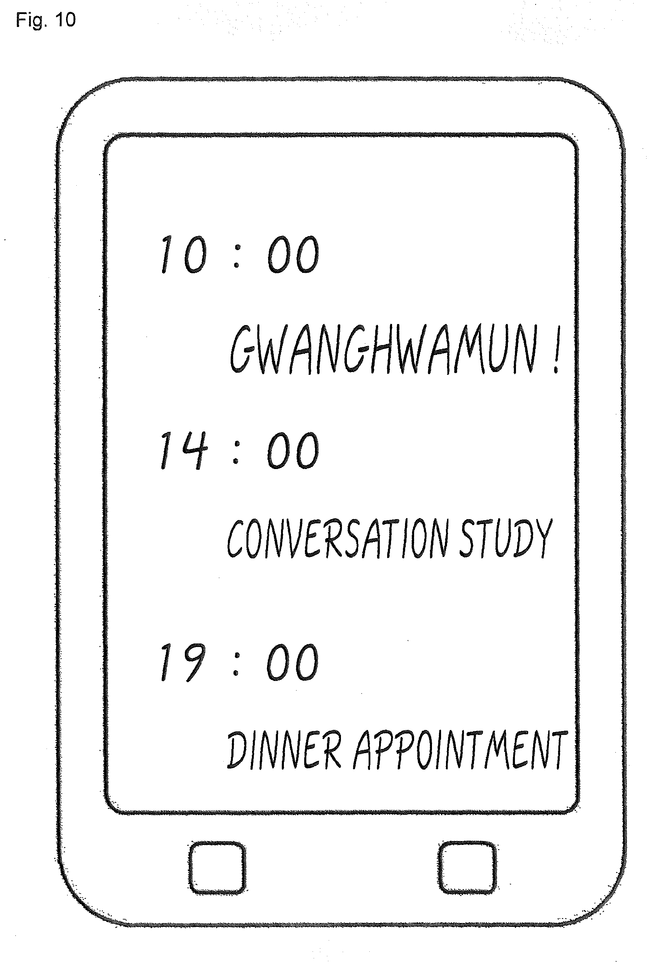

FIG. 10 is another example of a screen configuration of the electronic pen system according to the exemplary embodiment of the present invention. Referring to FIG. 10, the reflective display 10 of the electronic pen system may perform a function of a notebook, a diary, and the like. In FIG. 10, only characters recorded by using the electronic pen 30 are displayed on an empty screen, but horizontal lines or vertical lines may be provided so as to perform a writing function, like a general notebook.

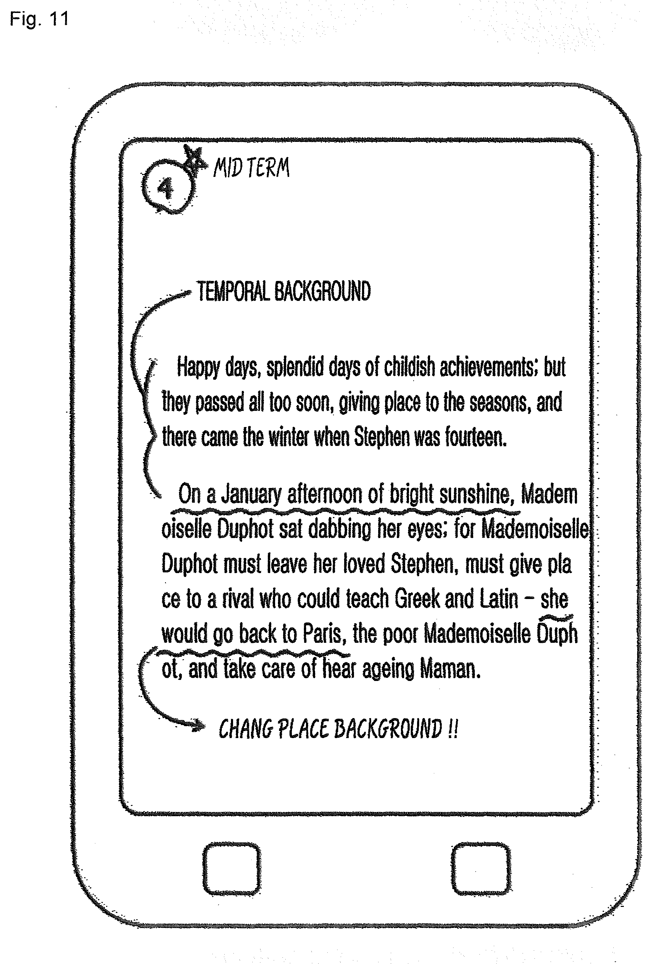

FIG. 11 is yet another example of a screen configuration of the electronic pen system according to the exemplary embodiment of the present invention. Referring to FIG. 11, the electronic pen system according to another exemplary embodiment of the present invention may be linked with an e-book system including the reflective display 10 to be utilized by a method of putting a memo to information displayed on a screen or underlining the information. The electronic pen system may also be utilized in a digital textbook, an electronic board, and a terminal device, such as a smart phone, implementable by the reflective display, as well as the e-book. Further, the electronic pen system may be implemented so that only information displayed with the electronic pen 30 may be separately extracted and stored by adding a database and a communication device to the listed devices implemented by the reflective display, and the information may be transmitted to other terminal devices and the like by using a communication device.

A term "... unit" used in the present exemplary embodiment means a software element or a hardware element, such as a field programmable gate array (FPGA) or application specific integrated circuit (ASIC), and the "... unit" performs specific functions. However, the term "... unit" is not limited to software or hardware. The term "... unit" may be configured to be present in an addressable storage medium, or to reproduce one or more processors. Accordingly, for example, the term "... unit" includes elements, such as software elements, object-oriented software elements, class elements, and task elements, processes, functions, attributes, procedures, sub-routines, segments of a program code, drivers, firmware, a micro code, a circuit, data, a database, data structures, tables, arrays, and variables. The elements and the functions provided by the "... units" may be combined with the smaller number of elements and "... units", or be further separated into additional elements and "... units". In addition, the elements and "... units" may be implemented so as to reproduce one or more CPUs within a device or a security multimedia card.

Although the present invention has been described with reference to the exemplary embodiments, those skilled in the art may understand that the present invention may be variously modified and changed within a scope without departing from the spirit and the area of the present invention described in the accompanying claims.

## Claims

1. An optical film disposed on a reflective display, and formed with an information pattern for providing position information by using light reflected from the reflective display, wherein the information pattern includes virtual grid lines and a plurality of marks.

2. The optical film of claim 1, wherein the information pattern includes the virtual grid lines formed at a predetermined interval and one or more marks based on a crossing point of the virtual grid lines, and the position information is provided by a mark value determined according to a position of the mark formed based on the crossing point of the virtual grid lines.

3. The optical film of claim 1, wherein the mark is formed by using infrared ray absorbing ink.

4. The optical film of claim 3, wherein the mark is formed of a phthalocyanine-based compound, a napthalocyanine-based compound, and an aminium-based compound.

5. An electronic pen system, comprising:
a reflective display configured to display information by using surrounding light;
an optical film disposed on the reflective display, and formed with an information pattern including virtual grid lines and a plurality of marks for providing position information by using light reflected from the reflective display; and
an electronic pen configured to recognize the information pattern, and transmit a signal for displaying graphic information on the reflective display.

6. The electronic pen system of claim 5, wherein the reflective display is driven by any one method among an electrophoretic method, a micro-electro-mechanical system (MEMS), and an electrowetting method.

7. The electronic pen system of claim 5, wherein the mark of the optical film is formed of infrared ray absorbing ink.

8. The electronic pen system of claim 5, wherein the reflective display has brightness equal to or greater than a middle step of the gray scales divided into a plurality of steps.

9. The electronic pen system of claim 8, wherein brightness of the mark of the optical film and brightness of the graphic information displayed on the reflective display are relatively formed according to the gray scales.

10. The electronic pen system of claim 5, wherein the electronic pen recognizes the information pattern and transmits a signal for displaying the graphic information on the reflective display or deleting the graphic information.

11. The electronic pen system of claim 10, further comprising:
a first infrared sensor provided at one side of the electronic pen and configured to recognize an information pattern for displaying the graphic information; and
a second infrared sensor provided at the other side of the electronic pen and configured to recognize an information pattern for deleting the graphic information.
